# EUROPEAN PATENT APPLICATION

(11) **EP 4 339 679 A1**
(43) Date of publication of application: **20.03.2024**
(21) Application number: 22196270.7
(22) Date of filing: 19.09.2022
(51) Int. Cl.: G02B 21/00, G02B 21/26, G02B 21/36

(54) **STAGE INSERT, MICROSCOPE SYSTEM, APPARATUS, METHOD AND COMPUTER PROGRAM**

(71) Applicant: Leica Microsystems CMS GmbH, 35578 Wetzlar (DE)
(72) Inventor: RITSCHEL, Kai, 35452 Heuchelheim (DE); BELJAN, Mate, 61440 Oberursel (DE)
(74) Representative: 2SPL Patentanwälte PartG mbB

(57) **Abstract**

A stage insert is provided. The stage insert 150 comprises a first region 152 for accommodating a sample holder 154. Further, the stage insert 150 comprises a second region 162 comprising a first calibration target 164 for calibrating a first parameter of the microscope system. The stage insert 150 also comprises a third region 172 comprising a second calibration target 174 for calibrating a second parameter of the microscope system.

## Description

### Technical field

Examples relate to a stage insert, a microscope system, an apparatus, a method and a computer program.

### Background

Modern microscopy is increasingly supported by algorithms. These algorithms often have certain prerequisites and requirements that are difficult or very cost-intensive to realize purely optically. In the future, there will hardly be a microscope that is not based on a combination of opto-digital processes and will thus depend on calibrations of various kinds.

Current examples of calibrations are a camera alignment of a microscope system, a superposition with a confocal laser scanning microscope and the distortion correction required for this or calibrations that were necessary to enable spectral unmixing.

Further, even existing microscopes often need to be calibrated manually. For example, the user regularly performs a shading correction. For this each objective change in the nosepiece must be combined with a parfocality calibration so that the focus is not lost during a subsequent change (analogous to a parcentricity calibration, so that the center of the image does not shift).

Specific algorithms for calibration are based on the introduction of a well-defined standard into the microscope system. Different calibrations require different standards. For example, while a measurement of a dimension is based on knowledge of the exact dimensions, for an "alignment" it is essential that the orientation is unambiguous and easily recognized. However, neither of these can be reconciled with the requirements for distortion correction (periodic, uniform, and filling the entire field of view). Thus, there may be a need to improve a calibration of a microscope system.

### Summary

It is a finding of the inventors that a calibration of a microscope system can be improved by using a stage insert comprising multiple calibration targets. A first calibration targets is for calibrating a first parameter and a second calibration target is for calibrating a second parameter of the microscope system. By using multiple calibration targets part of the stage insert several calibration processes with several calibration parameters can be performed consecutively or simultaneously. In this way, a calibration process with multiple calibration parameters can be performed without a need manually exchanging the calibration target.

Examples provide a stage insert for a microscope system. The stage insert comprises a first region for accommodating a sample holder. Further, the stage insert comprises a second region comprising a first calibration target for calibrating a first parameter of the microscope system. The stage insert also comprises a third region comprising a second calibration target for calibrating a second parameter of the microscope system. The first parameter may be associated with a first calibration. The second parameter may be associated with a second calibration. By using the stage insert comprising multiple calibration targets multiple calibrations can be performed. In this way, a need to install a specific calibration target for a calibration process can be omitted. Thus, increasingly complex applications which require increasingly complex hardware and interaction with software, for example, for multiple calibrations, can be automated. Further, a required accuracy of the microscope system can be ensured by performing different calibrations consecutively or simultaneously without any further changes to the microscope system.

In an example, at least one of the first calibration target or the second calibration target may be a calibration standard. By using a calibration standard a well-defined structure can be provided for the calibration. In this way, an accuracy and/or reliability of the calibration can be improved.

In an example, the first calibration target may be assigned to a first calibration technique of the microscope system and the second calibration target may be assigned to a second calibration technique of the microscope system. By assigning the first and the second calibration target to different calibration techniques multiple calibrations can be performed using the stage insert. In this way, the stage insert can be used to perform a complex calibration comprising multiple calibration techniques. This may be especially beneficial for automation of the calibration of the microscope system.

In an example, the first calibration target or the second calibration target may comprise at least one of a fluorescent area, a geometric pattern, a rotation-variant structure or a periodical structure. In this way, the stage insert can be used for a calibration requiring a calibration target for a specific calibration technique.

In an example, the second region may be arranged adjacent a first side of the first region and the third region may be arranged adjacent a second side of the first region. By arranging the second region and the third region adjacent different sides of the first region a layout of the stage insert can be adjusted. For example, the first and the second calibration target may be arranged considering the accessibility of an objective of the microscope system. In this way, a range of use of the stage insert can be increased.

In an example, the stage insert may further comprise a machine-readable identifier to identify the stage insert. For example, the machine-readable identifier can be an RFID tag or a QR-Code. By using the machine-readable identifier the stage insert can be identified. In this way, the microscope system can determine stage insert information about the stage insert installed, e.g., available calibration targets part of the stage insert. Thus, an automation of the calibration of the microscope system can be improved based on the stage insert information.

In an example, the stage insert may further comprise a marker for checking a position of the stage insert relative to a stage of the microscope system. The marker may be any structure suitable for identifying a position and/or orientation of the stage insert relative to the stage. By checking the position of the stage insert based on the marker an installation of the stage insert can be checked. In this way, it can be ensured that the calibration is not negatively affected by an incorrectly installed stage insert.

Examples provide a microscope system, comprising a stage insert as described above. In this way, a calibration of the microscope system can be improved.

Examples provide an apparatus for a microscope system comprising one or more processors and one or more storage devices. The apparatus is configured to obtain stage insert information about a stage insert of the microscope system. The stage insert comprises a calibration region. Further, the apparatus is configured to trigger a movement of the stage insert relative to an objective of the microscope system. The movement is triggered based on a stored position information of the calibration region so that the calibration region is in the field of view of the microscope system. Further, the apparatus is configured to trigger an image acquisition of the calibration region and to control a calibration of the microscope system based on the acquired image. The stage insert information can comprise data indicative of calibration targets part of the stage insert. By obtaining the stage insert information the apparatus can determine the position of the calibration targets relative to the field of view of the microscope system. Thus, the apparatus can move the stage insert relative to the objective for image acquisition of the calibration target(s). By triggering an image acquisition and controlling the calibration, based on the acquired image, the microscope system can be calibrated. In this way, a reliability and/or accuracy of the calibration can be improved.

In an example, the apparatus may be further configured to receive system information about a change of the microscope system and/or environment information about an environment of the microscope system. Further, the apparatus may be configured to determine, based on the system information and/or the environment information, whether a further calibration of the microscope system is needed. Further, the apparatus may be configured to control a further calibration of the microscope system based on the determined need. By receiving the system information and/or the environment information the status of the microscope system can be monitored. Thus, a change in the status of the microscope system can be determined which may affect the usability of a previous calibration of the microscope system. By determining whether a further calibration is needed and controlling the further calibration the previous calibration can be replaced. Thus, a change of the microscope system that results in an error of the previous calibration can be used to trigger a further calibration of the microscope system. In this way, it can be ensured that a calibration of the microscope system can be used for a measurement.

In an example, the calibration region may comprise a first calibration target for calibrating a first parameter and a second calibration target for calibrating a second parameter of the microscope system. The apparatus can be further configured to trigger a first image acquisition of the first calibration target. Further, the apparatus can be configured to trigger a second image acquisition of the second calibration target. The apparatus can also be configured to control the calibration of the microscope system based on the acquired first image and the acquired second image. By triggering a first image acquisition and a second image acquisition multiple calibration target can be examined. By controlling the calibration of the microscope system a calibration can be performed using different calibration techniques. In this way, an accuracy and/or reliability of the calibration can be improved. Further, the calibration can be automated in an improved way.

In an example, the apparatus may be further configured to control the calibration so that after the first image acquisition and before the second image acquisition a first calibration technique is performed for the first calibration parameter and a second calibration technique is performed for the second calibration parameter after the second image acquisition based on the acquired second image. By performing the first calibration technique before the second calibration technique a calibration comprising multiple calibration techniques can be performed with respect to an order of the multiple calibration techniques. In this way, a reliability of the calibration can be increased.

In an example, the apparatus may be further configured to control the calibration so that after the first image acquisition and during the second image acquisition a first calibration technique is performed for the first calibration parameter based on the acquired first image and a second calibration technique is performed for the second calibration parameter after the second image acquisition based on the acquired second image. By performing the first calibration technique during the second calibration technique a speed of the calibration comprising multiple calibration techniques can be increased. In this way, a performance of the microscope system can be increased.

In an example, the stage insert information may comprise information about a marker of the stage insert. Further, the apparatus may be configured to trigger a movement of the stage insert relative to an objective of the microscope system based on a stored position information of the marker so that the marker is in the field of view of the microscope system. Further, the apparatus may be configured to trigger an image acquisition of the marker and check whether the stage insert is installed correctly into the microscope system based on the acquired image of the marker. By triggering an image acquisition of the marker an installation of the stage insert can be checked. In this way, it can be ensured that the calibration is not negatively affected by an incorrectly installed stage insert.

Examples provide a method comprising receiving stage insert information about a stage insert of the microscope system comprising a calibration region. The method further comprises triggering a movement of the stage insert relative to an objective of the microscope system based on a stored position information of the calibration region so that the calibration region is in the field of view of the microscope system. The method further comprises triggering an image acquisition of the calibration region and controlling a calibration of the microscope system based on the acquired image.

Examples further relate to a computer program having a program code for performing the method described above, when the computer program is executed on a computer, a processor, or a programmable hardware component.

### Short description of the Figures

Some examples of apparatuses and/or methods will be described in the following by way of example only, and with reference to the accompanying figures, in which
Fig. 1 shows a schematic illustration of an example of a stage insert;
Fig. 2a and 2b show schematic illustrations of examples of a stage inserts;
Figs. 3a, 3b show an example of an apparatus and a microscope system;
Fig. 4 shows an example of method 400 for calibration of a microscope system;
Fig. 5 shows another example of a method; and
Fig. 6 shows a schematic illustration of a system.

### Detailed Description

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Various examples will now be described more fully with reference to the accompanying drawings in which some examples are illustrated. In the figures, the thicknesses of lines, layers and/or regions may be exaggerated for clarity.

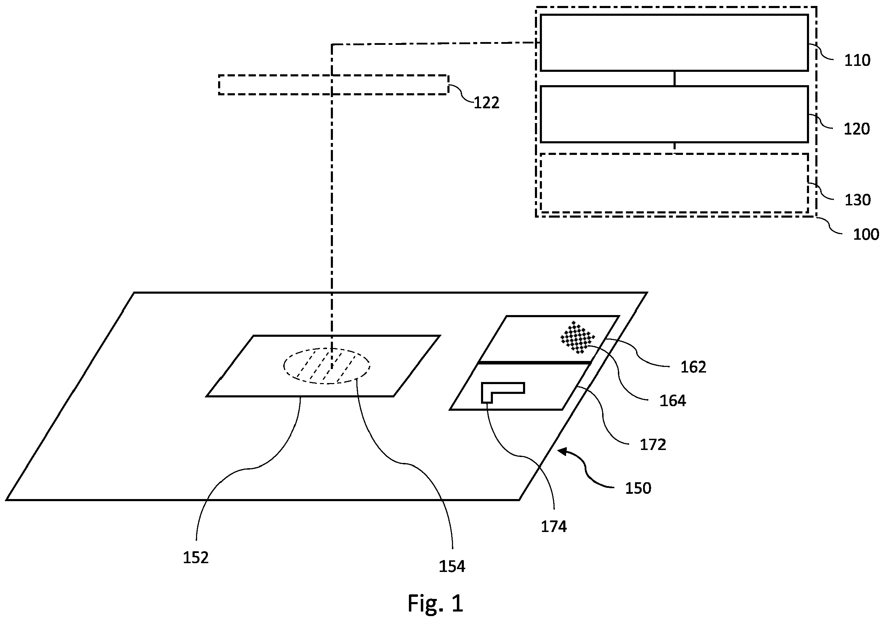

Fig. 1 shows a schematic illustration of an example of a stage insert 150. The stage insert 150 comprises a first region 152 for accommodating a sample holder 154. Further, the stage insert 150 comprises a second region 162 comprising a first calibration target 164 for calibrating a first parameter of the microscope system. The stage insert 150 also comprises a third region 172 comprising a second calibration target 174 for calibrating a second parameter of the microscope system. Combining multiple calibration targets 164, 174 may eliminate the need to change a calibration target for each calibration. In this way, a rate of performed calibrations can be increased.

An error in a calibration or a complete absence of a calibration may lead to a wide variety of consequential errors in image acquisition, which are sometimes difficult to detect and thus can lead to incorrect conclusions. The stage insert 150 may reduce an effort of a calibration for a user and/or a source of error in the calibration (e.g., due to the defined position of the calibration targets). For example, the stage insert 150 may reduce a time consumption of the calibration, e.g., by automation. Further, the stage insert 150 may significantly simplify the calibration, since the sample do not have to be removed. In addition, the stage insert 150 may also allow the calibrations to be performed exactly when needed, since no removal of the sample is required. In this way, an effect on a measurement caused by an environmental condition such as a temperature drift, can be reduced or even avoided by an increased calibration rate. The stage insert 150 may reduce a time consumption for the calibration and/or may also significantly improve the quality of the image acquisition, for example. Further, automation can also relieve the user of the decision as to whether recalibration is necessary at all. In this way, the user experience can be increased.

The stage insert 150 can be used to avoid removing a currently installed sample to change or install a calibration target. Thus, a performance of the microscope system can be increased. Further, this may enable an automation of the calibration. For example, guiding a user through the calibration, e.g., using a wizard, can be omitted. This can reduce the time required for calibration and/or reduce the susceptibility to errors due to user interaction. In this way, it can be ensured that effects that negatively affect a measurement are avoided.

For example, when positioning inaccuracies are to be corrected, recalibration may be required after each change to the setup of the microscope system. For example, a bumping to a camera of the microscope system can be sufficient to change the setup. This would mean that a user has to remove the sample to install the calibration target to perform a recalibration. In the case of a Petri dish with an aqueous medium, for example, this could lead to unwanted movement within the sample. Furthermore, if a stage top incubator with additional tubes or sensors is used, de-installation of the sample could severely affect the measurement. By using the stage insert 150, a removal of the sample can be avoided. In this way, the performance of the microscope system and/or the user-friendliness can be increased.

Furthermore, the relatively high effort of such calibration for known systems also means that they are performed too infrequently or at least at the wrong times. For example, removing the sample for calibration may result in a calibration being performed at power-up, but not at the final operating status, e.g., at a final temperature of the microscope system. The stage insert 150 can be used to perform a calibration at any desired time, such as when the microscope system is fully operational, for example, with an installed sample. In this way, a compensation needed to account for a temperature drift between a calibration and a measurement can be omitted.

Optionally, the stage insert 150 may include calibration targets 164, 174 for multiple calibration technique of the microscope system. For example, different calibration targets can be arranged on the stage insert 150 to allow multiple or in the best case all calibration techniques of the microscope system using the stage insert 150. In this way, multiple calibration techniques of the microscope system can be performed using by the stage insert 150. Thus, a stage insert 150 which may comprise universal calibration targets can be provided.

This may eliminate the need to remove the sample at all. In addition, this may allow for better calibration as the microscope can obtain a position of the calibration targets 164, 174. Thus, a calibration associated to a calibration target 164, 174 can be automated. Further, a calibration comprising multiple calibration techniques can be performed in one process without requiring user action, e.g., a fine adjustment, between the calibration techniques. This may also allow to recalibrate the microscope system as needed, e.g., during a long-term measurement, to check and optionally record the currently accuracy of the microscope system. In this way, a calibration of the microscope system can be updated when needed, e.g., by performing a further calibration.

A calibration target 164, 174 may be suitable for multiple calibration techniques of the microscope system. Thus, the stage insert 150 may comprise a smaller number of calibration targets 164, 174 than the microscope system comprises calibration techniques.

In an example, at least one of the first calibration target or the second calibration target may be a calibration standard. The calibration standard may be a normed structure. The normed structure may be associated with a calibration technique. A manufacturing tolerance of the normed structure may be below a threshold given by an associated calibration technique. The threshold may be defined by a desired accuracy of the calibration. For example, the calibration standard may be manufactured to ensure a predefined accuracy of the calibration of the microscope system. In this way, the use of the calibration standard can increase the reliability and/or accuracy of the calibration.

In an example, the first calibration target may be assigned to a first calibration technique of the microscope system and the second calibration target may be assigned to a second calibration technique of the microscope system. A calibration may comprise performing at least one calibration technique. A calibration technique may be associated with the calibration of a particular parameter (e.g., the first or the second parameter) of the microscope system, such as a measurement parameter, e.g., a pixel size, an alignment, a parfocality. In this way, the stage insert 150 can be used to perform multiple calibrations and/or a calibration comprising different calibration techniques. For example, the stage insert 150 can be at least accepted as an industry standard or best practice. For example, the stage insert 150 may be a universal calibration target which can be used by multiple microscope system for calibration.

In an example, the first calibration target 164 or the second calibration target 174 may comprise at least one of a fluorescent area, a geometric pattern, a rotation-variant structure or a periodical structure. Thus, the first calibration target 164 or the second calibration target 174 can be associated with a desired calibration technique. The fluorescent area may be to calibrate a parameter belonging to a fluorescent measurement. The geometric pattern may be to calibrate a pixel size. The rotation-variant structure may be to calibrate an alignment. The periodical structure may be to calibrate a distortion and/or a parfocality. In this way, a desired calibration technique can be performed using the stage insert 150.

In an example, the second region 162 may be arranged adjacent a first side of the first region 152 and the third region 172 may be arranged adjacent a second side of the first region 152. The second region 162 and the third region 172 may be arranged with respect to a layout of the stage insert 150. The second region 162 and the third region 172 can be arranged to minimize an outside dimension of the stage insert, e.g., a lateral dimension. For example, the first side and the second side may be opposing sides. In this way, the available space of the stage insert 150 can be used better. Thus, an area needed for the stage insert 150 can be reduced.

In an example, the stage insert 150 may further comprise a machine-readable identifier to identify the stage insert. For example, the machine-readable identifier can be an RFID tag or a QR-Code. The machine-readable identifier can be used to identify the stage insert 150, e.g., by the apparatus 100. In this way, the microscope system can obtain information about the installed stage insert 150. The identifier can be different from the first calibration target 164 and the second calibration target 174.

For example, the stage insert 150 can be coded such that the apparatus 100 can check whether the stage insert is installed correctly and/or operational. Optionally or alternatively, the stage insert can be at least trained such that the stage insert 150 can be used by the microscope system.

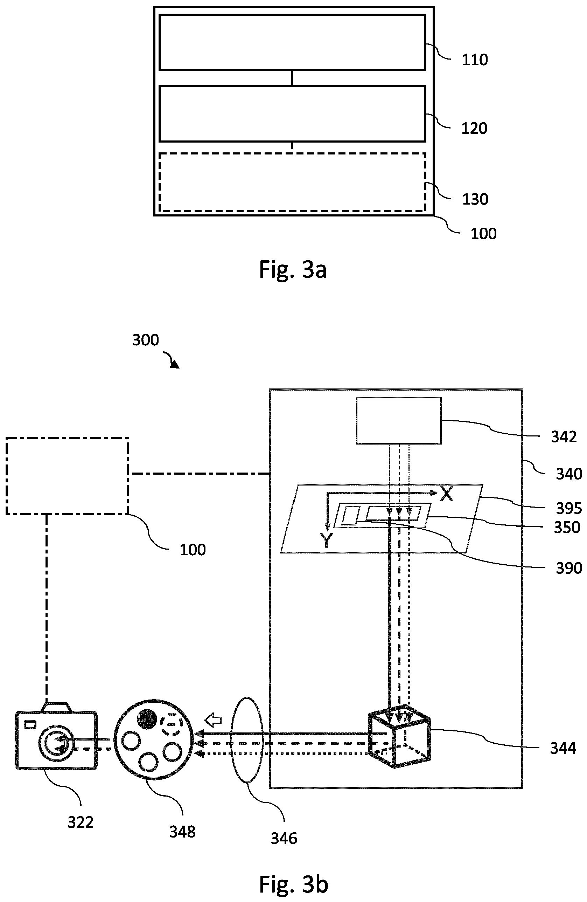

The apparatus 100 comprises one or more processors 110 and one or more storage devices 120 and optionally interface circuitry 130. The apparatus 100 can be used to perform the calibration as described in more detail in Fig. 3. The apparatus may receive information about an acquired image for calibrating the microscope system from a camera 122 or an optical imaging sensor.

In an example, the stage insert 150 may further comprise a marker for checking a position of the stage insert relative to a stage of the microscope system. For example, the marker may be any structure suitable for identifying a position and/or orientation of the stage insert 150 relative to the stage. The marker can be or can be part of the identifier. The marker can be different from the first calibration target 164 and the second calibration target 174.

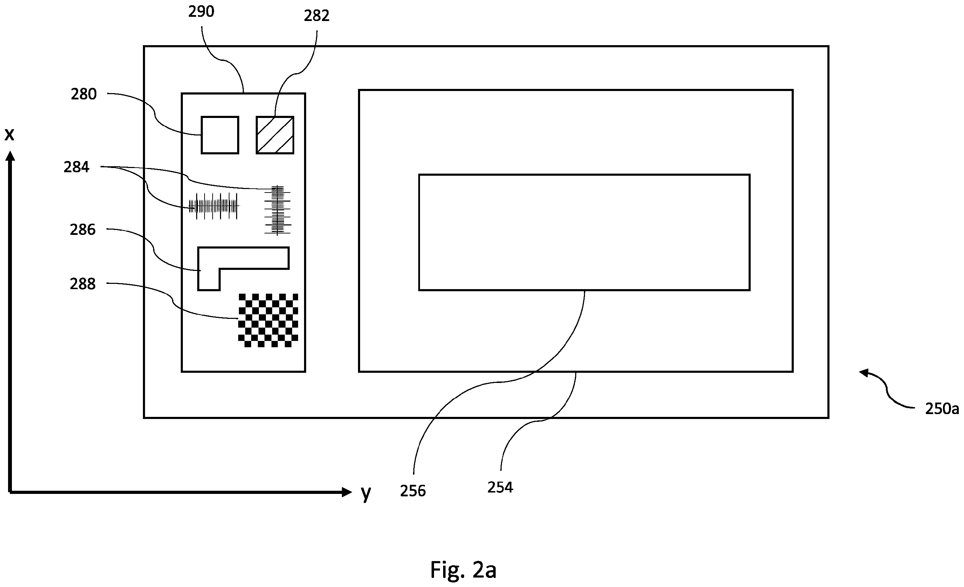

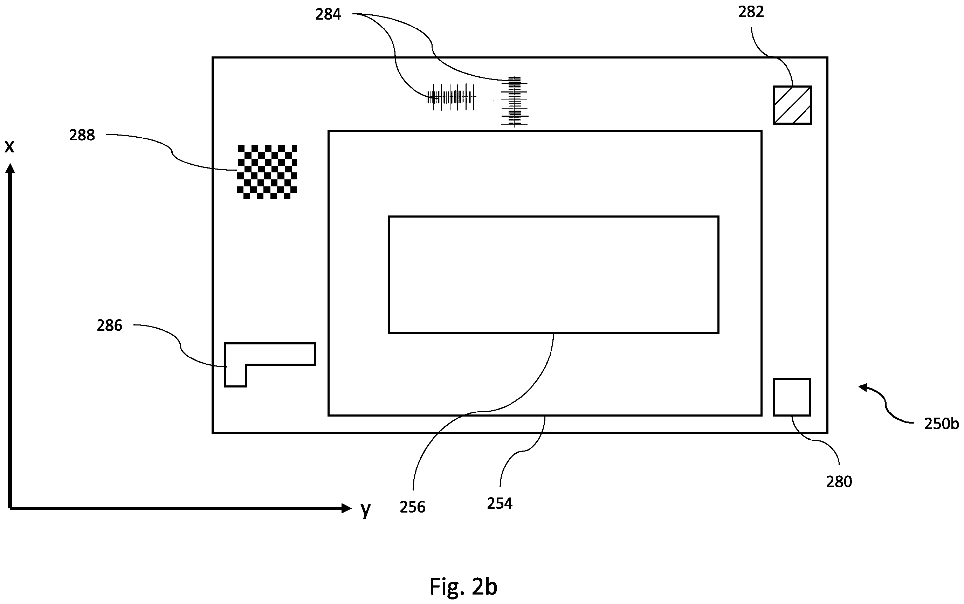

More details and aspects are mentioned in connection with the examples described below. The example shown in Fig. 1 may comprise one or more optional additional features corresponding to one or more aspects mentioned in connection with the proposed concept or one or more examples described below (e.g., Fig. 2 - 6).

Fig. 2a and 2b show schematic illustrations of examples of a stage inserts 250a, 250b. The stage insert 250a shown in Fig. 2a comprises a calibration region 290, a sample holder 254 and a sample 256. The calibration region 290 comprises the second region (not shown) and the third region (not shown) as described above. Further, the calibration region 290 comprises multiple calibration targets 280, 282, 284, 286, 288.

The stage insert 250a may be suitable for calibrating several parameters of the microscope system. The stage insert 250a can be used to perform a shading calibration (e.g., with transmitted light or fluorescent light), a pixel size calibration, an alignment calibration, a distortion calibration, a parfocality calibration, a parcentricity calibration, a color balance calibration and/or a parallelism of an axis of the stage to an axis of the stage insert 250a, for example.

The position of the multiple calibration targets 280, 282, 284, 286, 288 may be selected with respect to a sample holder (e.g., a slide, a Petri dish, a multi-well plate), a sample and/or a stage, for example. For example, the multiple calibration targets 280, 282, 284, 286, 288 can be arranged at one side of the stage insert 250a as shown in Fig. 2a. In this way, the three other sides of the stage insert 250 can be used for arranging certain components such as tubes connecting the sample 256 for a measurement.

Alternatively, as shown in Fig. 2b the multiple calibration targets 280, 282, 284, 286, 288 can be arranged at different sides of the sample holder 254 or the sample 256. In this way, the available space of the stage insert 250b can be used better. Further, arranging the multiple targets 280, 282, 284, 286, 288 at different sides may allow to determine a tilt of the stage insert in different direction. For example, the multiple calibration targets 280, 282, 284, 286, 288 may be arranged at different sides to account for a distance between objective and stage insert 250b, e.g., to prevent a collision between the stage insert and the objective.

For a shading calibration only a free, clean area may be required as provided by the calibration target 280. In contrast, for a fluorescent imaging a homogeny fluorescent area may be required as provided by calibration target 282. For a pixel calibration a periodic structure, as provided by calibration target 284, may be required. For example, the periodic structure can be a lineal shaped structure. For an alignment calibration a rotation variant structure may be required as provided by calibration target 286. A distortion calibration may require a periodic pattern as provided by calibration target 288. A parfocality calibration may require a focusable object with a defined point, e.g., as provided by calibration target 286. A parallelism of an axis of the stage to an axis of the stage insert 250a can be checked by use of the calibration target 286. For example, a tilt of the stage insert 250a compared to the stage (such as stage 395 as shown in Fig. 3b) in which the stage insert 250a is placed can be checked/determined. As an example, a tilt between an xy-plane of the stage compared to an xy-plane of the stage insert 250a can be calculated by determining the z differences of multiple points on the stage insert 250a. The multiple points can be defined by multiple, preferably identical, calibration targets 280, 282, 284, 286, 288. The calculation can be based on calculating a focus measurement of the multiple calibration targets 280, 282, 284, 286, 288, in several positions of the stage insert 250a, for example. In an example, the stage insert 250 may comprise multiple identical calibration targets arranged at different position on the stage insert 250a. In this way, a chance for an error can be reduced. This can prevent tilted sample acquisitions, which would lead to out of focus imaging data or increased recording times, due to automatic focus detection and correction.

Using the stage inserts 250a, 250b a removal of the sample or the sample holder can be avoided. Further, due to the know dimension of the stage insert 250a, 250b and the position of the calibration targets 280, 282, 284, 286, 288 a calibration can be automated. For example, an automated stage can move in an x-direction and/or z-direction to a position such that a calibration target 280, 282, 284, 286, 288 is in the field of view of the microscope system. In this way, the calibration of the microscope system can be automated, e.g., a calibration comprising different calibration techniques. This can increase an accuracy of the calibration and/or a user experience.

Additional, due to the known position of the calibration targets 280, 282, 284, 286, 288 a wizard for a calibration can be uncoupled from a user input. In this way, the calibration can be performed fully automated. For example, a needed order of different calibration techniques of a calibration can be ensured by the automated calibration. In this way, a reliability of the calibration can be increased, as the susceptibility to errors due to user interaction can be reduced. For example, a parfocality calibration can be performed after each change of the objective, e.g., after a de-installation and a re-installation of the objective.

Further, automation can be used to calibrate the microscope system in response to a trigger event. For example, the microscope system can be calibrated after a start-up process of the microscope system, after a change of the setup of the microscope system, after a change of the environmental condition. In this way, a measurement can be improved without a required user interaction. This may be of particular interest for a long-term measurement.

More details and aspects are mentioned in connection with the examples described above and/or below. The example shown in Fig. 2 may comprise one or more optional additional features corresponding to one or more aspects mentioned in connection with the proposed concept or one or more examples described above (e.g., Fig. 1) and/or below (e.g., Fig. 3 - 6).

Figs. 3a, 3b show an example of an apparatus 100 and a microscope system 300. As can be seen in Fig. 3a the apparatus 100 comprises one or more processors 110 and one or more storage devices 120. The apparatus 100 is configured to obtain stage insert information about a stage insert of the microscope system. The stage insert comprises a calibration region. Further, the apparatus 100 is configured to trigger a movement of the stage insert relative to an objective of the microscope system based on a stored position information of the calibration region so that the calibration region is in the field of view of the microscope system. Further, the apparatus 100 is configured to trigger an image acquisition of the calibration region and to control a calibration of the microscope system based on the acquired image.

The apparatus 100 comprises, as shown in Fig. 1, one or more processors 110 and one or more storage devices 120. Optionally, the apparatus 100 may further comprise an interface circuitry 130. The one or more processors may be (communicatively) coupled to the one or more storage devices 120 and optionally to the interface circuitry 130. In general, the functionality of the apparatus 100 is provided by the one or more processors 110, in conjunction with the one or more storage devices 120 (for obtaining the stage insert information). Optionally or alternatively the stage insert information may be received via the interface circuitry 130.

The proposed concept is built around two main components - a microscope system, which comprises the optical components, and which houses the apparatus 100, which is used to control a calibration of the microscope system based on the acquired image.

The stage insert information may be obtained through a user input. For example, the stage insert information may comprise data about the calibration targets comprised by the stage insert. Alternatively, the stage insert information may comprise information about a type of the stage insert, e.g., a model number. In this case, the one or more processors 110 can receive information about specific parameters of the stage insert, e.g., the calibration targets and the position of these, from a database, e.g., the one or more storage devices 120.

Optionally or alternatively, the stage insert information can be obtained through a read out of an identifier of the stage insert. For example, the apparatus 100 may trigger a read out of an identifier of the stage insert. The identifier can be used to receive information about specific parameters of the stage insert, e.g., the calibration targets and the position of these, from a database. In this way, the apparatus 100 can obtain the information about the stage insert automated.

The movement of the stage insert relative to an objective of the microscope system can be triggered by the apparatus 100 by generating a movement signal indicative of the relative movement. The movement signal can be transmitted to a control unit of the microscope system. The control unit may control an actor of the microscope system based on the movement signal to move the stage insert relative to the objective. In this way, the calibration region can be moved into a field of view of the microscope system.

The image acquisition can be triggered by the apparatus 100 by generating an image signal indicative of an image acquisition. The image signal can be transmitted to the control unit. The control unit may control a camera of the microscope system to acquire an image.

The apparatus 100 can control the calibration by determining a calibration parameter based on the acquired image. The calibration can be triggered by a user input, a predefined time interval, an environmental condition. For example, the calibration can be triggered by the user, e.g., by installing the stage insert, requesting a service or a control, providing an input (information) of the installed stage insert. Alternatively, the apparatus 100 can control the calibration of the microscope system, e.g., without a need for user interaction.

In contrast to the stage insert as described above, e.g., in Fig. 1 and Fig.2, the calibration region comprises at least one calibration target. As described above the calibration target can be a calibration normal. For example, the stage insert may comprise only one calibration target. This calibration target can be used for different calibration techniques, e.g., parfocality calibration and an alignment calibration and/or different operation modes of the microscope system such as widefield or confocal mode.

In an example, the apparatus may be further configured to receive system information about a change of the microscope system and/or environment information about an environment of the microscope system. Further, the apparatus may be configured to determine, based on the system information and/or the environment information, whether a further calibration (recalibration) of the microscope system is needed. Further, the apparatus may be configured to control a further calibration of the microscope system based on the determined need. In this way, an automated recalibration depending on the status of the microscope system and/or the environment information can be performed. The status of the microscope may be defined by a component currently installed in the microscope system, e.g., a sample holder, an objective. When the status is changed, e.g., an objective is de-installed and re-installed, a recalibration may be necessary. For example, when the parfocality is taught incorrectly, the focus is lost when the objective is changed, and the entire experiment becomes invalid. This can be prevented by performing a recalibration of the microscope system. Thus, a performance of the microscope system can be increased by an automated recalibration.

The environment information may comprise data about a temperature, a humidity, a background illumination, an acceleration of the microscope system (e.g., caused by a bump of a user). For example, when a temperature change of the environment has exceeded a threshold during a measurement, the apparatus 100 may determine a need for a recalibration. In this way, it can be ensured that the calibration is adapted to the environment of the microscope system by recalibrating if needed. The recalibration can be performed automated by the apparatus 100. For example, the apparatus 100 can receive the environment information from a sensor of the microscope system, e.g., a temperature sensor, a humidity sensor, an acceleration sensor.

In an example, the calibration region may comprise a first calibration target for calibrating a first parameter and a second calibration target for calibrating a second parameter of the microscope system. The apparatus 100 can be further configured to trigger a first image acquisition of the first calibration target. Further, the apparatus 100 can be configured to trigger a second image acquisition of the second calibration target. The apparatus 100 can also be configured to control the calibration of the microscope system based on the acquired first image and the acquired second image. In this way, a calibration comprising multiple calibration techniques can be performed by the apparatus 100 automated. Thus, an accuracy and/or reliability of the calibration can be increased. For example, an order of the first image acquisition and the second acquisition may be important for the calibration.

In an example, the apparatus 100 may be further configured to control the calibration so that after the first image acquisition and before the second image acquisition a first calibration technique is performed for the first calibration parameter and a second calibration technique is performed for the second calibration parameter after the second image acquisition based on the acquired second image. For example, a calibration with two associated calibration technique. Further, one calibration technique, e.g., a first calibration technique, can comprise matching of two operation modes, e.g., widefield and confocal mode. Both modes may have different distortions, which could counteract an alignment. To compensate for this firstly the distortion of both modes can be determined and calibrated by use of the first calibration target and the first calibration technique. Secondly an alignment calibration may be performed based on the distortion calibration by use of the second calibration target and a second calibration technique. Thus, the second calibration technique is associated with or dependent on the first calibration technique. Optionally, the distortion of both operation modes can also be calibrated separately one after the other. For example, the first calibration technique can be applied to a first mode and then to the second mode. A separate image can be captured for both.

In an example, the apparatus 100 may be further configured to control the calibration so that after the first image acquisition and during the second image acquisition a first calibration is performed for the first calibration parameter based on the acquired first image and a second calibration is performed for the second calibration parameter after the second image acquisition based on the acquired second image. An example for a relevant order of calibrations can be to first calibrate the distortion of a system, to improve the achieved quality of a subsequent alignment calibration.

In an example, the stage insert information may comprise information about a marker of the stage insert. Further, the apparatus 100 may be configured to trigger a movement of the stage insert relative to an objective of the microscope system based on a stored position information of the marker so that the marker is in the field of view of the microscope system. Further, the apparatus 100 may be configured to trigger an image acquisition of the marker and check whether the stage insert is installed correctly into the microscope system based on the acquired image of the marker. In this way, a position/and or orientation of the stage insert can be checked, e.g., automatically.

Fig. 3b shows a microscope system 300. In general, the microscope system 300 may comprise a microscope 340. The microscope 340 can be an optical instrument that is suitable for examining objects that are too small to be examined by the human eye (alone). For example, a microscope 340 may provide an optical magnification of a sample. In modern microscopes, the optical magnification is often provided for a camera 322 or an imaging sensor, such as an optical imaging sensor. The microscope 340 may further comprise one or more optical magnification components that are used to magnify a view of the sample.

The microscope system 300 may comprise a stage 395 for mounting the stage insert 350 and an illumination source 342 (e.g., an LED or laser or light source device in the form of a matrix of light sources or in the form of an array of light sources) for illuminating a sample. Further, the microscope system 300 may comprise an optical component 344 for defining the optical path of the microscope 340. Further, the microscope system 300 may comprise a mounting structure 346, e.g., a C-mount, for mounting a camera 322 to the microscope. An image acquired by the camera 322 can be affected by a filter 348 in the optical path.

There is a variety of different types of microscopes. If the microscope is used in the medical or biological fields, the sample being viewed through the microscope may be a sample of organic tissue, e.g., arranged within a petri dish or present in a part of a body of a patient. However, the proposed concept may also be applied to other types of microscope systems, e.g., microscopy in a laboratory or microscopy for the purpose of material inspection.

The microscope system 300, can comprise a stage insert 350 as described in Fig. 1 or 2 and/or an apparatus as described in Fig. 3. The stage insert 350 can comprise a calibration region 390 which can comprise the second and the third region.

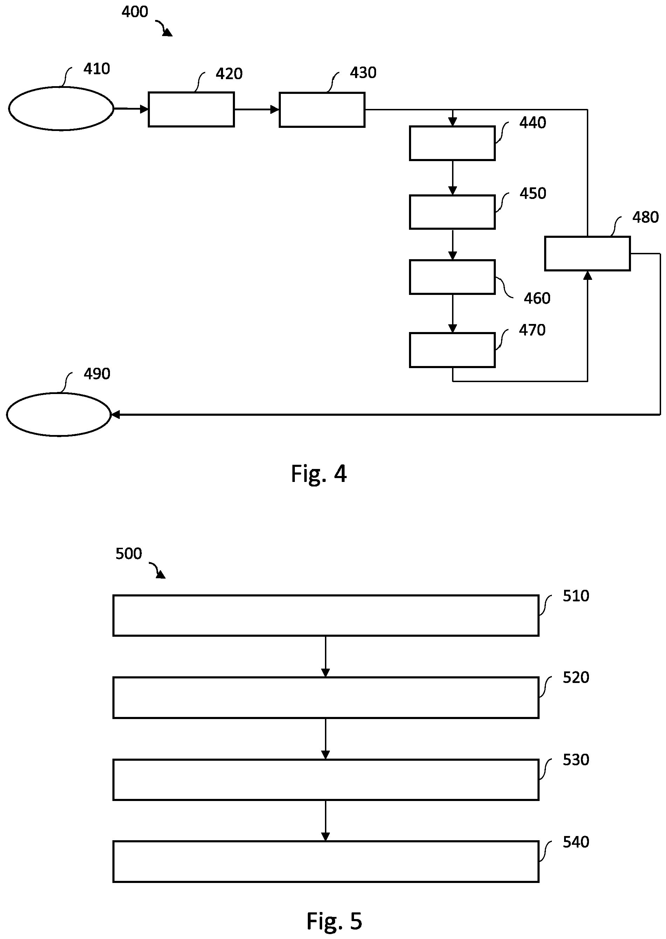

More details and aspects are mentioned in connection with the examples described above and/or below. The example shown in Fig. 3 may comprise one or more optional additional features corresponding to one or more aspects mentioned in connection with the proposed concept or one or more examples described above (e.g., Fig. 1 - 2) and/or below (e.g., Fig. 4 -6).

Fig. 4 shows an example of method 400 for calibration of a microscope system. The method 400 can be performed by an apparatus as described above, e.g., with reference to Fig. 3. The method 400 comprises in 410 obtaining information about a request and/or needed calibration. For example, the calibration can be requested by a user, e.g., by a user input and/or by determining a change of the status of the microscope system, e.g., by receiving information from a sensor of the microscope system.

In 420 a selection of a set of required calibration techniques for the calibration is performed. For example, the one or more processors of the apparatus may receive information about a requested calibration and can read the calibration techniques required for that calibration from the one or more storage devices. Further, in 430 the selected calibration technique can be sorted into a best order, e.g., to reduce a time consumption for the calibration. Since some calibration techniques build on each other (e.g., distortion and alignment), the sorting the calibration techniques to an ideal sequence of calibration techniques to be performed, may eliminate further possibilities for a user error.

In 440 the stage may be moved to a calibration position to enable an image acquisition of a calibration target of a stage insert (e.g., a stage insert as described in Fig. 1 or Fig. 2 or a stage insert comprising only one calibration target). In the calibration position the calibration target is in a field of view of the microscope system such that image acquisition of the calibration target is possible.

In 450 a calibration may be performed automated, e.g., by the apparatus. Alternatively, in 450 the calibration can be performed using a software such as a calibration wizard. In this case, the user may provide a user input for the calibration. For example, the functionality of the software may be provided the apparatus or a control unit of the microscope system. An output to inform the user about a needed user input can be provided by a monitor. The monitor can be a part of the microscope system.

Further, a result of the calibration can be verified in 460. In 470 a result of the calibration can be stored, e.g., in the one or more storage devices of the apparatus. Additionally, a check whether a further calibration is needed can be performed in 480. In 490 the calibration of the microscope system can be finished.

More details and aspects are mentioned in connection with the examples described above and/or below. The example shown in Fig. 4 may comprise one or more optional additional features corresponding to one or more aspects mentioned in connection with the proposed concept or one or more examples described above (e.g., Fig. 1 - 3) and/or below (e.g., Fig. 5 -6).

Fig. 5 shows another example of a method 500. The method 500 comprises receiving 510 stage insert information about a stage insert of the microscope system comprising a calibration region. The method 500 further comprises 520 triggering a movement of the stage insert relative to an objective of the microscope system. The relative movement is triggered based on a stored position information of the calibration region so that the calibration region is in the field of view of the microscope system. The method 500 further comprises triggering 530 an image acquisition of the calibration region and controlling 540 a calibration of the microscope system based on the acquired image. The method 500 may be performed by the apparatus as described above, e.g., in Fig. 3.

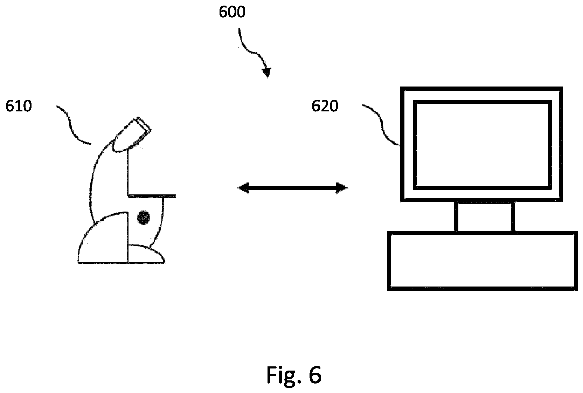

More details and aspects are mentioned in connection with the examples described above and/or below. The example shown in Fig. 5 may comprise one or more optional additional features corresponding to one or more aspects mentioned in connection with the proposed concept or one or more examples described above (e.g., Fig. 1 - 4) and/or below (e.g., Fig. 6).

Some embodiments relate to a microscope comprising an apparatus as described in connection with one or more of the Figs. 1 to 5. Alternatively, a microscope may be part of or connected to an apparatus as described in connection with one or more of the Figs. 1 to 7. Fig. 6 shows a schematic illustration of a system 600 configured to perform a method described herein, e.g., with reference to Figs. 4 or 5. The system 600 comprises a microscope 610 and a computer system 620. The microcsope may comprise the apparatus as described above, e.g., with reference to Fig. 3 and/or the stage insert as described above, .e.g, with reference to Fig. 1 or 2. The microscope 610 is configured to take images and is connected to the computer system 620. The computer system 620 is configured to execute at least a part of a method described herein. The computer system 620 may be configured to execute a machine learning algorithm. The computer system 620 and microscope 610 may be separate entities but can also be integrated together in one common housing. The computer system 620 may be part of a central processing system of the microscope 610 and/or the computer system 620 may be part of a subcomponent of the microscope 610, such as a sensor, an actor, a camera or an illumination unit, etc. of the microscope 610.

The computer system 620 may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system 620 may comprise any circuit or combination of circuits. In one embodiment, the computer system 620 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g., camera) or any other type of processor or processing circuit. Other types of circuits that may be included in the computer system 620 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 620 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 620 may also include a display device, one or more speakers, and a keyboard and/or controller, which can include a mouse, trackball, touch screen, voice-recognition device, or any other device that permits a system user to input information into and receive information from the computer system 620.

More details and aspects are mentioned in connection with the examples described above. The example shown in Fig. 6 may comprise one or more optional additional features corresponding to one or more aspects mentioned in connection with the proposed concept or one or more examples described above (e.g., Fig. 1 - 5).

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

### List of reference Signs

100 apparatus
110 one or more processors
120 one or more storage devices
122 camera
130 interface circuitry
150 stage insert
152 first region
154 sample holder
162 second region
164 first calibration target
172 third region
174 second calibration target
250a, 250b stage insert
254 sample holder
256 sample
280, 282, 284, 286, 288 calibration target
290 calibration region
300 microscope system
322 camera
340 microscope
342 illumination source
344 optical component
346 mounting device
348 filter
350 stage insert
390 calibration region
395 stage
400 method for calibration of a microscope system
410 obtaining information about a request
420 selecting of a set of required calibration techniques
430 sorting the selected calibration techniques
440 moving the stage to a calibration position
450 performing a calibration
460 verifying a result of the calibration
470 storing a result of the calibration
480 checking whether a further calibration is needed
490 finishing a calibration of the microscope system
500 method for calibration of a microscope system
510 receiving stage insert information
520 triggering a movement of the stage insert
530 triggering an image acquisition
540 controlling a calibration of the microscope system
600 system
610 microscope
620 computer system

## Claims

1. A stage insert (150; 250; 350) for a microscope system, comprising:
a first region (152) for accommodating a sample holder (154);
a second region (162) comprising a first calibration target (164) for calibrating a first parameter of the microscope system; and
a third region (172) comprising a second calibration target (174) for calibrating a second parameter of the microscope system.

2. The stage insert (150; 250; 350) according to claim 1, wherein
at least one of the first calibration target (164) or the second calibration target (174) is a calibration standard.

3. The stage insert (150; 250; 350) according to any of the preceding claims, wherein
the first calibration target (164) is assigned to a first calibration technique of the microscope system and the second calibration target (174) is assigned to a second calibration technique of the microscope system.

4. The stage insert (150; 250; 350) according to any of the preceding claims, wherein
the first calibration target (164) or the second calibration target (174) comprises at least one of a fluorescent area, a geometric pattern, a rotation-variant structure or a periodical structure.

5. The stage insert (150; 250; 350) according to any of the preceding claims, wherein
the second region (162) is arranged adjacent a first side of the first region (152) and the third region (172) is arranged adjacent a second side of the first region (152).

6. The stage insert (150; 250; 350) according to any of the preceding claims, further comprising
a machine-readable identifier to identify the stage insert (150; 250; 350).

7. The stage insert (150; 250; 350) according to any of the preceding claims, further comprising
a marker for checking a position of the stage insert (150; 250; 350) relative to a stage of the microscope system.

8. A microscope system, comprising
a stage insert (150; 250; 350) according to any of the preceding claims.

9. An apparatus (100) for a microscope system, comprising one or more processors (110) and one or more storage devices (120), wherein the apparatus (100) is configured to:
obtain stage insert information about a stage insert (150; 250; 350) of the microscope system, the stage insert (150; 250; 350) comprising a calibration region;
trigger a movement of the stage insert (150; 250; 350) relative to an objective of the microscope system based on a stored position information of the calibration region so that the calibration region is in the field of view of the microscope system;
trigger an image acquisition of the calibration region; and
control a calibration of the microscope system based on the acquired image.

10. The apparatus (100) according to claim 9, wherein the apparatus (100) is further configured to:
receive at least one of system information about a change of the microscope system or environment information about an environment of the microscope system;
determine, based on at least one of the system information or the environment information, whether a further calibration of the microscope system is needed; and
control a further calibration of the microscope system based on the determined need.

11. The apparatus (100) according to claim 9 or 10, wherein
the calibration region comprises a first calibration target for calibrating a first parameter of the microscope system and a second calibration target for calibrating a second parameter of the microscope system, and wherein
the apparatus (100) is further configured to:
trigger a first image acquisition of the first calibration target;
trigger a second image acquisition of the second calibration target; and
control the calibration of the microscope system based on the acquired first image and the acquired second image.

12. The apparatus (100) according to claim 11, wherein the apparatus (100) is further configured to
control the calibration so that after the first image acquisition and before the second image acquisition a first calibration technique is performed for the first calibration parameter and a second calibration technique is performed for the second calibration parameter after the second image acquisition based on the acquired second image.

13. The apparatus (100) according to any of claims 9 - 11, wherein the apparatus (100) is further configured to
control the calibration so that after the first image acquisition and during the second image acquisition a first calibration technique is performed for the first calibration parameter based on the acquired first image and a second calibration technique is performed for the second calibration parameter after the second image acquisition based on the acquired second image.

14. The apparatus (100) according to any of the claims 9 -13, wherein
the stage insert information comprises information about a marker of the stage insert and wherein
the apparatus (100) is further configured to:
trigger a movement of the stage insert relative to an objective of the microscope system based on a stored position information of the marker so that the marker is in the field of view of the microscope system;
trigger an image acquisition of the marker; and
check whether the stage insert is installed correctly into the microscope system based on the acquired image of the marker.

15. A method for a microscope system, comprising:
receiving stage insert information about a stage insert of the microscope system comprising a calibration region;
triggering a movement of the stage insert relative to an objective of the microscope system based on a stored position information of the calibration region so that the calibration region is in the field of view of the microscope system;
triggering an image acquisition of the calibration region; and
controlling a calibration of the microscope system based on the acquired image.

16. A computer program having a program code for performing a method according to claim 15 when the program is executed on processor.

## Amended claims

### Amended claims in accordance with Rule 137(2) EPC.

1. A stage insert (150; 250; 350) for a microscope system, comprising:
a first region (152) for accommodating a sample holder (154);
a second region (162) comprising a first calibration target (164) for calibrating a first parameter of the microscope system; and
a third region (172) comprising a second calibration target (174) for calibrating a second parameter of the microscope system.

2. The stage insert (150; 250; 350) according to claim 1, wherein
at least one of the first calibration target (164) or the second calibration target (174) is a calibration standard.

3. The stage insert (150; 250; 350) according to any of the preceding claims, wherein
the first calibration target (164) is assigned to a first calibration technique of the microscope system and the second calibration target (174) is assigned to a second calibration technique of the microscope system.

4. The stage insert (150; 250; 350) according to any of the preceding claims, wherein
the first calibration target (164) or the second calibration target (174) comprises at least one of a fluorescent area, a geometric pattern, a rotation-variant structure or a periodical structure.

5. The stage insert (150; 250; 350) according to any of the preceding claims, wherein
the second region (162) is arranged adjacent a first side of the first region (152) and the third region (172) is arranged adjacent a second side of the first region (152).

6. The stage insert (150; 250; 350) according to any of the preceding claims, further comprising
a machine-readable identifier to identify the stage insert (150; 250; 350).

7. The stage insert (150; 250; 350) according to any of the preceding claims, further comprising
a marker for checking a position of the stage insert (150; 250; 350) relative to a stage of the microscope system.

8. A microscope system, comprising
a stage insert (150; 250; 350) according to any of the preceding claims.

9. An apparatus (100) for a microscope system, comprising one or more processors (110) and one or more storage devices (120), wherein the apparatus (100) is configured to:
obtain stage insert information about a stage insert (150; 250; 350) of the microscope system, the stage insert (150; 250; 350) comprising a calibration region comprising a first calibration target for calibrating a first parameter of the microscope system and a second calibration target for calibrating a second parameter of the microscope system;
trigger a movement of the stage insert (150; 250; 350) relative to an objective of the microscope system based on a stored position information of the calibration region so that the calibration region is in the field of view of the microscope system;
trigger a first image acquisition of the first calibration region;
trigger a second image acquisition of the second calibration target and
control a calibration of the microscope system based on the acquired first image and the acquired second image.

10. The apparatus (100) according to claim 9, wherein the apparatus (100) is further configured to:
receive at least one of system information about a change of the microscope system or environment information about an environment of the microscope system;
determine, based on at least one of the system information or the environment information, whether a further calibration of the microscope system is needed; and
control a further calibration of the microscope system based on the determined need.

11. The apparatus (100) according to claim 9 or 10, wherein the apparatus (100) is further configured to
control the calibration so that after the first image acquisition and before the second image acquisition a first calibration technique is performed for the first calibration parameter and a second calibration technique is performed for the second calibration parameter after the second image acquisition based on the acquired second image.

12. The apparatus (100) according to any of claims 9 - 10, wherein the apparatus (100) is further configured to
control the calibration so that after the first image acquisition and during the second image acquisition a first calibration technique is performed for the first calibration parameter based on the acquired first image and a second calibration technique is performed for the second calibration parameter after the second image acquisition based on the acquired second image.

13. The apparatus (100) according to any of the claims 9 - 12, wherein
the stage insert information comprises information about a marker of the stage insert and wherein
the apparatus (100) is further configured to:
trigger a movement of the stage insert relative to an objective of the microscope system based on a stored position information of the marker so that the marker is in the field of view of the microscope system;
trigger an image acquisition of the marker; and
check whether the stage insert is installed correctly into the microscope system based on the acquired image of the marker.

14. A method for a microscope system, comprising:
receiving stage insert information about a stage insert of the microscope system comprising a calibration region comprising a first calibration target for calibrating a first parameter of the microscope system and a second calibration target for calibrating a second parameter of the microscope system;
triggering a movement of the stage insert relative to an objective of the microscope system based on a stored position information of the calibration region so that the calibration region is in the field of view of the microscope system;
triggering a first image acquisition of the first calibration region;
triggering a second image acquisition of the second calibration region; and
controlling a calibration of the microscope system based on the acquired first image and the acquired second image.

15. A computer program having a program code for performing a method according to claim 14 when the program is executed on processor.
